# EUROPEAN PATENT SPECIFICATION

(11) **EP 3 323 876 B1**
(45) Date of publication and mention of the grant of the patent: **23.01.2019**
(21) Application number: 17726998.2
(22) Date of filing: 02.05.2017
(51) Int. Cl.: C12G 1/00, C12H 1/14

(54) **WINE PRODUCING PROCESS USING FLOWERS OF CASTANEA SATIVA**
WEINHERSTELLUNGSPROZESS UNTER VERWENDUNG DER BLÜTEN VON CASTANEA SATIVA
PROCÉDÉ DE PRODUCTION DE VIN PAR UTILISATION DE FLEURS DE CASTANEA SATIVA

(30) Priority: 09.06.2016 PT 2016109448
(43) Date of publication of application: 23.05.2018
(73) Proprietor: Instituto Politécnico De Bragança, 5300-253 Bragança (PT)
(72) Inventor: FERREIRA, Isabel, 5300-849 Bragança (PT); ALVES HELENO, Sandrina, 5300-127 Bragança (PT); MAGALHÃES PINTO PAIVA, Fernando, 4600-632 Amarante (PT); BENTO, Albino António, 5300-855 Bragança (PT)
(74) Representative: Pereira da Cruz, Joao
(86) International application number: PCT/IB2017/052535
(87) International publication number: WO 2017/212351

(56) References cited:
- EP-A1- 1 892 286
- EP-A1- 2 090 647
- WO-A1-03/074648

## Description

### FIELD OF THE INVENTION

The present invention refers to a method of production of wine without added sulphites, and the wine obtained from that new method. It relates to the impact of using synthetic preservatives, namely sulphites, in wine making, and proposes an alternative solution of natural preservatives for the production of wine.

### PRIOR ART

Over time, the interest in the development of food additives has increased exponentially as industries have been required to increase the shelf life of products, especially for exportation, where the addition of additives such as preservatives was necessary in order to ensure the food arrival to the destination, in good conditions of quality and safety, avoiding its contamination and deterioration. There are currently over 2500 food additives, mostly used as preservatives, to increase the shelf life of foodstuff while maintaining its chemical and organoleptic properties.
However, there are some problems arising from the use of these products, generally related to toxicological or allergenic effects. As a result, the use of chemical additives (antioxidants or antimicrobials) in food is increasingly restricted by the food legislation (EC Regulation 1331/2008). Among the most commonly used preservatives there are the sulphites, a group of molecules (the most common are sulphur dioxide, sodium and potassium bisulphite, sodium and potassium bisulphate) used in foodstuff, acting as antimicrobial and anti-browning agents, exerting its antimicrobial activity through the removal of SH groups from the sulphites inside the microorganism cells where they react with proteins, DNA, enzymes; while the antioxidant effect occurs through the inhibition of Maillard and the polyphenol-Oxidase enzyme (Carocho, M., Barreiro, MF, Morales, P., Ferreira, ICFR Adding molecules to food, pros and cons - Comprehensive Reviews in Food Science and Food Safety, 2014, 377-399).

These molecules can exert their activity in their free form or they can combine with other molecules as with organic acids, being very used in the wine industry and also in other foodstuff prone to deterioration by the action of microorganisms. However, there is some controversy in the use of these additives, because some of them have been strongly associated with health problems, namely toxicological or allergenic ones (Carocho, M., Morales, P., Ferreira, ICFR) Natural food additives: Quo vadis?. Trends in Food Science and Technology, 2015, 45, 284-295). Therefore, the use of some of these synthetic additives is increasingly restricted in food regulations (EC Regulation 1331/2008). These synthetic molecules cause harmful effects on human health, being related to the destruction of vitamin B1 (thiamine), respiratory and skin sensitivity problems causing dermatitis, urticaria, angioedema, abdominal pain, diarrhea, and fatal anaphylaxis (Vally, H, Allosa, M., Allosa, M., Allosa, M., Allosa, M., Allan, M., Allan, M., Allergic contact dermatitis caused by sodium, Clinical & Experimental Allergy, 2009, 39, 1643-51. Metabisulphite: a challenging allergen, a case series and literature review, Contact Dermatitis, 2012, 67, 260-9).
The propensity for these symptoms has gradually increased due to the large amount of sulphite-treated food products; thus in the European Union and in the United States, all sulphite-containing products have to mention this information on the label. Concerning the wine consumption, several studies have been carried out in different countries that warn of the dangers associated with individuals consuming large quantities of sulphited wine (Vandevijvere, S., Temme, E., Andjelkovic, M., Will, MD, Goeyens, L., Loco, JV Estimate of intake of sulphites in the Belgian adult population, Food Additives & Contaminants A, 2010, 27, 1072-1083).

Sulphur dioxide, a common used additive in the form of sulphites, is a fundamental compound in oenology due to its antimicrobial properties and also to its antioxidant and antioxidant and anti-browning properties, being its incorporation a current practice in the wine production process. However, this is one of the most susceptible additives to trigger allergic reactions, which has led to an increasing interest in the substitution of sulphur dioxide for natural products or alternative processes in winemaking (Izquierdo-Cañas, PM, García-Romero, E., Huertas-Nebreda, B., Gómez-Alonso, S. Colloidal silver complex as an alternative to sulphur dioxide in winemaking, Food Control, 2012, 23, 73-81).
Given the danger of sulphide intake to human health, the search for natural preservatives without toxicity has become a global priority. There are already some natural alternatives to sulphites, authorized and legislated, as formations based on ascorbic acid, such as erythorbic acid (E315, 5 mg/kg body weight); Cysteine (E920; quantum satis); Some phenolic acids, 4-hexylresorcinol (E586; Acceptable Daily Dose not specified), an organic compound that is only regulated in shrimp (Branen, AL, Davidson, PM, Salminen, S, Thorngate, J. 2001. Food additives. : Taylor & Francis).
Sulphites are also commonly used in the preservation of other foodstuff, such as beer, vinegars, crustaceans, minced meat and others, which means that there is a broad potential for these food industries, in the replacement of these synthetic compounds, by natural preservatives which comply with the regulations and with the food safety tests.
In this regard, the use of natural products as preservatives to replace the use of synthetic additives has been growing not only due to their preservative capacity but also due to the bioactive properties that these natural agents can confer to the food products, making them functional foods or beverages. The great majority of the used natural products present strong bioactivity due to the presence of bioactive molecules, namely phenolic compounds, reported as excellent antioxidants and antimicrobials, which justifies their use as preservatives. However, these molecules are also known for other bioativities, namely their high antitumor capacity (Carocho, M., Ferreira, ICFR The Role of Phenolic Compounds in the Fight Against Cancer - A Review, Anti-Cancer Agents in Medicinal Chemistry, 2013, 13, 1236-1258), being possible to take advantage of the presence of these natural compounds, from its use as preservatives in the food industry. Taking into account the legislative restrictions that have been imposed on the use of synthetic additives, natural sources have been highly exploited in this area, enabling the development of functional foods/drinks with natural additives, safer and of higher quality.
There are numerous studies in the literature describing hundreds of plants rich in polyphenols with preservative capacity; however, their use involves the extraction of these compounds as well as their purification, which is not the case in the present invention.
Some applications are well known with regard to the use of natural compounds as natural preservatives in the winemaking process. The patent application US2015044328, for example, refers to the use of resveratrol and/or pterostilbene as preserving agents of the phenolic compounds present in wines. Although the grapes contain these compounds in their constitution, they are present in low amounts, so that the authors of the above mentioned document need to increase their amounts to ensure the preservative effect of the phenolic compounds present in the wines. However, to be possible the addition of these compounds, extraction and subsequent purification processes are necessary to obtain the phenolic compounds with a high degree of purity for subsequent addition to the wine. These processes involve significant additional costs that are not bearable for several industries. In our invention all these additional costs are avoided since the extraction and purification steps of the compounds are not necessary because polyphenols, namely the tannins, particularly the compound trigalloyl-hexa-hydroxydiphenol-glucoside, are the major constituents of male chestnut flowers; thus the flowers are lyophilized and added directly to the wine in the necessary amount to exert the desired preservative effect.
The patent PT105981 describes a wine production process using a chitosan based film without adding sulphur dioxide to the wine. In a preferential embodiment, the films are prepared by covalent bounding of chitosan with other phenolic compounds with high antioxidant activity, for example caffeic acid or grape or wine extracts rich in antioxidant molecules. In this case it is necessary the preparation of biofilms, which involves a complex chemical process. In addition, large amounts of chitosan are required, which requires extraction processes based on organisms having this compound (shrimp shells) and further purification. These extraction and purification steps cause significant costs to the industries that are constantly applying for simplified and low-cost treatments and procedures, as also for extraction methods using greener solvents. Moreover, chitosan may present allergenic problems which reduce its applicability in the food industry. The present invention is distinguished by the lack of solvents to obtain the matrix rich in polyphenols, since it is added to the wine in its natural form (dehydrated flowers).
Among the natural matrices, the chestnut tree (*C. sativa*) presents a great diversity of components with different uses, such as chestnuts, used for feeding and leaves commonly used in the preparation of infusions and decoctions. However, the flowers are also used in the preparation of "teas" and soft drinks in order to increase the nutritional value of these beverages and also giving a floral aroma (CN102524895 B),, being described as excellent sources of phenolic compounds, especially in trigalooyl-hexa-hydroxydiphenol-glucoside, exhibiting strong antioxidant, antimicrobial and also antitumor activity (Carocho, M., et al., 2006). , Barros, L., Bento, A., Santos-Buelga, C., Morales, P., Ferreira, ICFR. C. sativa Mill Flowers Among the Most Powerful Antioxidant Matrices: A Phytochemical Approach in Decoctions and Infusions BioMed Research International, 2014, 2014, 1-7; Carocho, M., Calhelha, RC, Queiroz, MJRP, Bento, A., Morales, P., Soković, M., Ferreira, ICFR Infusions and decoctions of C. sativa flowers as effective antitumor and Antimicrobial Trices, Industrial Crops and Products, 2014, 62, 2-46).

Taking into account the bioactive properties exhibited by the flowers of C. *sativa,* in the present invention these flowers were incorporated directly into wine during the wine making process in alternative to the addition of sulphites, which proved to be toxic and cause health problems to the consumers of products containing these synthetic additives. The advantage of using C. *sativa* flowers as an alternative to sulphites is to guarantee the consumer a wine product with the same physicochemical and sensorial characteristics, but much safer in terms of health since the use of sulphites is completely eliminated and thus avoiding the problems that may arise from its presence in wine. Moreover, the bioactive molecules present in the C. *sativa* flowers can confer to the wine other bioactive properties besides the preservative effect, coming from the incorporated flowers enabling the consumer to obtain these advantages while enjoying a highly appreciated product.
In the present invention, chestnut flowers are used directly, without the need of extraction steps, so no extracts are used. The male chestnut flowers are harvested, lyophilized and added directly to the green wine, replacing the addition of sulphites, without changing the manufacturing process. From an industrial point of view, it is an economically viable application and it is not very labour since there is no need to extract the bioactive compounds, eliminating the use of organic solvents which are normally used for the extraction of phenolic compounds, and difficult to eliminate by the food industries.

### SOLVED TECHNICAL PROBLEMS

As detailed above, the present invention is directed into the problem of using toxic synthetic preservatives, namely sulphites, in wine making process, and proposes an alternative solution of natural preservatives for the production of wine.
The present invention describes the process of producing wine, and the wine obtained thereof, by using flowers of *Castanea sativa* Mill. as antioxidants and antimicrobials, in alternative to the use of sulphites and without altering physicochemical and sensorial parameters of the wine. The method of the invention does not require prior extraction and purification steps of the bioactive composition, therefore representing a low-cost alternative compatible with an industrial use in the wine making industry, unlike other natural conservatives disclosed so far.
*Castanea sativa* flowers have no allergenic effect unlike other natural compounds disclosed so far as alternative preservatives and, as an additional effect, the bioactive molecules present in the *C. sativa* flowers can confer to the wine other bioactive properties besides the preservative effect.
Considering the legislative restrictions that have been applied to the use of synthetic additives in the food industry due to the health risks associated with their ingestion, this invention provides a solution to a well-known problem of toxicity of food preservatives, namely the sulphites in the wine making process. Until now this problem remains unsolved as no industrially feasible solution has ever been presented without side effects and guaranteeing the physicochemical and sensorial parameters of the obtained wine.

### BRIEF DESCRIPTION OF THE INVENTION

The present invention describes the process of producing wine using flowers of *Castanea sativa* Mill. as natural preservatives, due to its antioxidant and antimicrobial properties, in alternative to the use of sulphites. A preferred embodiment refers to the production of *vinho verde* (green wine) without added sulphites.
In light of the legislative restrictions that have been applied to the use of synthetic additives in the food industry due to the health risks associated with their ingestion, new investigation fields arise considering the use of natural and bioactive sources with little or no toxicity and of high acceptability by the consumers.
Widely described for its antioxidant and antimicrobial activities, the flowers of *Castanea sativa* were added directly to the wine during its production process as an alternative to the addition of sulphites, keeping the rest of the process unchanged. Considering the obtained results, based on the physicochemical and sensorial analysis required for this type of drinks, the addition of flowers of *C. sativa* conferred to the wine preservative properties, without altering its physicochemical and sensorial parameters. The greatest advantage of this process is the complete elimination of the use of synthetic preservatives, namely sulphites, allowing the consumer to enjoy a highly appreciated product with quality and more importantly, safer, and that can also provide to the consumers other benefits derived from the bioactive compounds present in the flowers incorporated in the wine.

For the production of wine incorporated with flowers of *Castanea sativa* Mill, male flowers are harvested manually in the field, after the fertilization process, without prejudice in the formation of the fruit; the flowers are then lyophilized and incorporated into the green wine, during the production process. For the production process, the grapes are collected and pressed; the wort is transferred to a vat to which the *C. sativa* flowers are added in an amount selected according to the known bioactivity values (antioxidant and antimicrobial) already studied in order to confer preservative effects to the wine. After this process, the wort is cooled and transferred to another vat after 24 to 48 hours. Fermentation begins at controlled temperature with indigenous yeasts.

The wine is allowed to stand for 2-3 months after which it is re-transferred into another vat and stands until being bottled about 6 months later. At this stage the wine is also subjected to a series of required analyses, were different parameters with minimum and maximum values that are tabulated according to the legislation, such as the physicochemical and sensorial parameters, are evaluated, in order to verify if there were changes in the wine characteristics by the addition of flowers compared to the same wine with sulphites.

### BRIEF DESCRIPTION OF THE DRAWINGS

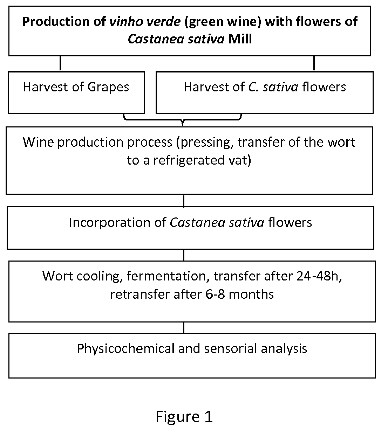

Figure 1 represents an overall scheme of the production process of *vinho verde* with male flowers of *C. sativa* Mill.

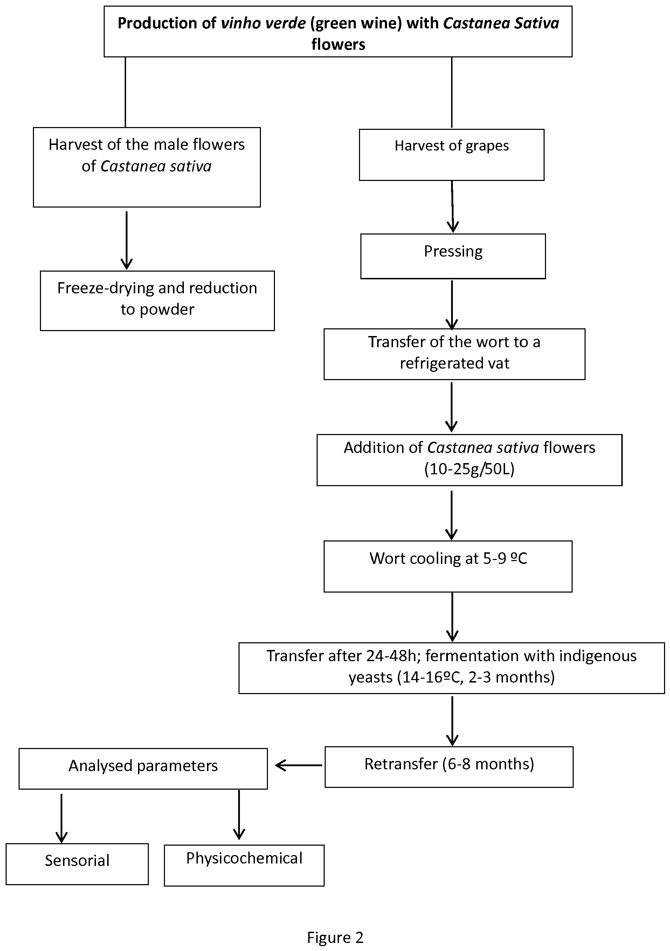

Figure 2 describes the schematic representation of the procedure from the production until obtaining *vinho verde* incorporated with *C. sativa* Mill flowers.

### DETAILED DESCRIPTION OF THE INVENTION

The present invention concerns a process for the production of wine without the addition of sulphites, characterized in that *Castanea sativa* flowers are used as natural preservatives, replacing the addition of synthetic sulphites.

In a preferred embodiment, the process for the production of wine without the addition of sulphites comprises the following steps:
a. Harvest of the flowers of *Castanea sativa* Mill;
b. Treatment and storage of the flowers of *Castanea sativa*;
c. Harvest and pressing of the grapes to obtain the wort;
d. Addition of *Castanea sativa* Mill flowers to the wort as natural preservatives, replacing the addition of synthetic sulphites;
e. Wort cooling;
f. Fermentation for the wine production.
In a more preferred embodiment, in step *a* of the process of the invention, male flowers of *Castanea sativa* Mill are manually harvested after the fertilization period.
In another preferred embodiment, in step *b* of the process of the invention, the flowers are lyophilized, reduced to powder and stored in a desiccator.
In another preferred embodiment, in step d of the process of the invention, the amount of flowers of *Castanea sativa* added is 10-25 g/50 L of wine.
In another preferred embodiment, in step c of the process of the invention, the grapes are harvested at the end of the summer and then pressed.
In another preferred embodiment, the wine without added sulphites is *vinho verde.*
In another preferred embodiment, in step *e* of the process of the invention, the wort is placed in a refrigerated vat at a temperature of 5°C to 9°C. In another more preferred embodiment, there is transfer to a fermentation vat after a period of 24-48h of cooling. In another preferred embodiment, the fermentation of the wine is made with indigenous yeasts at a temperature of 14-16°C for 2-3 months, followed by retransfer to another vat.

It is also an object of the present invention the wine obtained by the above mentioned process, said wine having a concentration of free sulphur dioxide less than 10 mg/dm³ and a concentration of total sulphur dioxide less than 33 mg/dm³. In a more preferred embodiment, said wine has a concentration of free sulphur dioxide of 8 mg/dm³ and a concentration of total sulphur dioxide of 18 mg/dm³.

In another preferred embodiment, the wine is *vinho verde.* In a more preferred embodiment, said green wine presents: acquired alcoholic strength by volume of 11.0% vol.; density of 0.9916 g/cm³; total dry extract of 20.6 g/dm³; Non-reducing extract of 19.1 g/dm³; total sugars lesser than 1.5 (LQ) g/dm³; total acidity 7.1g(tartaric acid)/dm³; volatile acidity of 0.57 g(acetic acid)/dm³; fixed acidity of 6.4 g(tartaric acid)/dm³; pH = 3.24; L-malic acid less than 0.3 (LQ) g/dm³; tartaric acid of 3.6 g/dm³; negative proof of stability of oxidation alteration; total alcoholic strength by volume of 11.1% vol.

### EXAMPLE

For the production of *vinho verde* (green wine) incorporated with flowers of *Castanea sativa* Mill, male flowers are harvested manually in the field, after the fertilization process, without prejudice in the formation of the fruit; the flowers are then lyophilized and incorporated into the green wine, during the production process. *Vinho verde* is produced by the producer Fernando Magalhães Pinto Paiva in the city of Amarante. For the production process, the grapes are collected and pressed; the wort is transferred to a vat to which the *C. sativa* flowers are added in an amount selected according to the known bioactivity values (antioxidant and antimicrobial) already studied in order to confer preservative effects to the wine. After this process, the wort is cooled and transferred to another vat after 24 to 48 hours. Fermentation begins at controlled temperature with indigenous yeasts.

The wine is allowed to stand for 2-3 months after which it is re-transferred into another vat and stands until being bottled about 6 months later. At this stage the wine is also subjected to a series of required analyses, were different parameters with minimum and maximum values that are tabulated according to the legislation, such as the physicochemical and sensorial parameters, are evaluated, in order to verify if there were changes in the wine characteristics by the addition of flowers compared to the same wine with sulphites.
- The first objective of the present invention is to collect the male flowers of *C. sativa.* For this purpose, the male flowers are harvested manually in the field after the fertilization period, without prejudice to the production of the chestnuts. With this approach, the male flowers, instead of being rendered useless, are harnessed by taking advantage of the high quantity of bioactive compounds which are present, giving them a functional use. The flowers are lyophilized, reduced to powder and stored in a desiccator for protection from moisture.
- The second objective is the production of *vinho verde.* The grapes are harvested near the end of the summer, and taken to the place of production. After this process, the grapes are pressed and the resulting wort is transferred to a refrigerated vat. At this stage the lyophilized flowers of *C. sativa* are added, in an amount based on their antioxidant and antimicrobial activity previously studied, corresponding to 10-25 g of lyophilized flower/50L of *vinho verde.* The wort is then cooled to 5-9 °C and after 24-48 hours it is transferred to another vat where fermentation takes place by the action of indigenous yeasts with temperature control at 14-16 °C for 2-3 months.

After this period, the wine is re-transferred to another vat to obtain a cleaner wine, and the precipitate resulting from the fermentation is discarded. After 6-8 months the wine is bottled.
- The third objective is to evaluate the physicochemical and sensorial parameters of the wine with flowers of *C. sativa,* having as a control the wine with addition of sulphites. These analyses are mandatory in this type of products and include a number of physicochemical parameters such as: acquired alcoholic strength by volume, density, total dry extract, non-reducing extract, total sugars, total acidity, volatile acidity, fixed acidity, pH, free sulphur dioxide, total sulphur dioxide, citric acid, chlorides, sulphates, total alcoholic strength by volume, for wine with sulphites; acquired alcoholic strength by volume, density, total dry extract, non-reducing extract, total sugars, total acidity, volatile acidity, fixed acidity, pH, free sulphur dioxide, total sulphur dioxide, L-malic acid, tartaric acid, stability test (oxidation alteration), total alcoholic strength by volume,for the wine with added flowers; Sensorial analysis (aspect-clarity, aspect-colour, flavour-descriptive proof, flavour-marked defect, flavour-quality, aroma-typicity) for the wine with added sulphites; and: (aspect-clarity, aspect-colour, flavour-descriptive proof, taste-descriptive proof) for the wine with *C. sativa* flowers. Minimum and maximum ranges comply with the regulations, so that all the wine products must be within these regulated ranges in order to be marketed.

The physicochemical parameters of the control wine with sulphites addition were: acquired alcoholic strength by volume = 11.49%; density = 0.9906 g/cm³, total dry extract = 19.6 g/cm³, non-reducing extract = 18.00 g/cm³, total sugars = 1.6 g/cm³, total acidity = 5.6 g(tartaric acid)/dm³, volatile acidity = 0.49 g(acetic acid)/dm³, fixed acidity = 5.0 g(tartaric acid)/dm³, pH = 3.26, free sulphur dioxide = 10 mg/dm³, total sulphur dioxide = 33 mg/dm³, citric acid <0.10 (LQ) g/dm³, Chlorides <0.034 (LQ) g(sodium chloride)/dm³, sulphates = 0.32 g(potassium sulphate)/dm³, total alcoholic strength by volume = 11.6% vol; and for the sensorial analysis: appearance-clarity = slightly opaline, aspect-colour= open straw, flavour descriptive-proof = young and slightly oliaceous, flavour defect-marked = no, flavour-quality = sufficient (5), flavour tipicity = typical, taste descriptive-proof = young and slightly olioceous, taste-defect marked = no, taste-quality = sufficient (5), taste-typicity = typical. The wine with the addition of flowers showed the following physicochemical parameters: alcoholic strength by volume = 11.0% vol., density = 0.9916 g/cm³, total dry extract = 20.6 g/dm³, non-reducing extract = 19.1 g/dm³, total sugars ≤1.5 (LQ) g/dm³, total acidity = 7.1 g(tartaric acid)/dm³, volatile acidity = 0.57 g(acetic acid)/dm³, fixed acidity = 6.4 g(tartaric acid)/dm³, pH = 3.24, free sulphur dioxide = 8 mg/dm³, total sulphur dioxide = 18 mg/dm³, L-malic acid <0.3 (LQ) g/dm³, tartaric acid = 3.6 g/dm³, stability test (oxidation alteration) = negative, total alcoholic strength by volume = 11.1% vol.; and for the sensorial analysis: aspect-clarity = slightly opaline, aspect-colour = open straw, flavour descriptive-proof = young and slightly oliaceous, taste descriptive- proof = young and slightly oliaceous.

According to the results, the wine with flowers of *C. sativa* proved to be a promising alternative to the wine with the addition of sulphites, since the incorporation of the flowers did not affect the physicochemical and sensorial characteristics. All the analyzed parameters were within the regulated ranges for each parameter. Thus the invention provides the wine industry with an alternative, promising and safe, allowing the consumption of highly appreciated, safer and better accepted product by the consumers, avoiding the addition of synthetic additives of known toxicity.

The invention describes the process for the production of *vinho verde* (green wine) by the producer Fernando Magalhães Pinto Paiva, using flowers of *Castanea sativa* Mill as antioxidant and antimicrobial agents, in alternative to the use of synthetic sulphites. More specifically, the present invention uses the flowers of *C. sativa* with excellent antioxidant and antimicrobial activity already proven. The flowers are directly added in order to replace the need to use synthetic sulphites (compounds with known toxicity) commonly used in the food industry, especially in the wine industry. The resulting product, the wine produced containing *C*. *sativa* flowers, was subjected to different physicochemical and sensorial analyses, revealing values similar to those of sulphite-containing wines in all the analysed parameters; that is, values within the legal parameters required for this type of drinks. The major advantage of the present invention is the complete elimination of the use of synthetic agents that are strongly related with health problems, guaranteeing consumer's greater safety in the wine consumption since it is a widely consumed and highly appreciated product throughout the world.

## Claims

1. Process for the production of wine without the addition of sulphites, **characterized in that** *Castanea sativa* flowers are used as natural preservatives, replacing the addition of synthetic sulphites.

2. Process for the production of wine without the addition of sulphites, **characterized by** comprising the following steps:
a. Harvest of the flowers of *Castanea sativa* Mill;
b. Treatment and storage of the flowers of C. sativa;
c. Harvest and pressing of the grapes to obtain the wort;
d. Addition of *C. sativa* flowers to the wort as natural preservatives, replacing the addition of synthetic sulphites;
e. Wort cooling;
f. Fermentation for the wine production.

3. Process for the production of wine without the addition of sulphites according to any of the preceding claims **characterized by**, in step a, male flowers of *C*. *sativa* being manually harvested after the fertilization period.

4. Process for the production of wine without the addition of sulphites according to any of the preceding claims **characterized by**, in step b, the flowers being lyophilized, reduced to powder and stored in a desiccator.

5. Process for the production of wine without the addition of sulphites according to any of the preceding claims **characterized by**, in step d, the amount of flowers of *C. sativa* added being 10-25 g/50 L of wine.

6. Process for the production of wine without the addition of sulphites, according to any of the preceding claims, **characterized by**, in step c, the grapes being harvested at the end of the summer and then pressed.

7. Process for the production of wine according to any of the preceding claims **characterized by** the wine without added sulphites being *vinho verde.*

8. Process for the production of wine without the addition of sulphites according to any of the preceding claims **characterized by**, in stage e, the wort being placed in a refrigerated vat at a temperature of 5°C to 9°C.

9. Process for the production of wine without the addition of sulphites according to claim 7 **characterized by** the transfer to a fermentation vat after a period of 24-48h of cooling.

10. Process for the production of wine without the addition of sulphites according to any of the preceding claims, **characterized by** the fermentation of the wine being made with indigenous yeasts at a temperature of 14-16°C for 2-3 months, followed by retransfer to another vat.

11. Wine obtained by the process described in claims 1 to 9, **characterized in that** it has a concentration of free sulphur dioxide of less than 10 mg/dm3 and a concentration of total sulphur dioxide of less than 33 mg/dm3.

12. Wine according to claim 10 **characterized in that** it has a concentration of free sulphur dioxide of 8 mg/dm3 and a concentration of total sulphur dioxide of 18 mg/dm3.

13. Wine according to any of the previous claims **characterized in that** it is *vinho verde.*

14. Wine according to claim 12 **characterized by** presenting: acquired alcoholic strength by volume of 11.0% vol.; density of 0.9916 g/cm³; total dry extract of 20.6 g/dm³; Non-reducing extract of 19.1 g/dm³; total sugars lesser than 1.5 (LQ) g/dm³; total acidity 7.1g(tartaric acid)/dm³; volatile acidity of 0.57 g(acetic acid)/dm³; fixed acidity of 6.4 g(tartaric acid)/dm³; pH = 3.24; L-malic acid less than 0.3 (LQ) g/dm³; tartaric acid of 3.6 g/dm³; negative proof of stability of oxidation alteration; total alcoholic strength by volume of 11.1% vol.

## Patentansprüche

1. Das Verfahren der Herstellung von Wein ohne Zusatz von Sulfiten, zeichnet sich durch die Verwendung der Blüten der *Castanea sativa* als natürlicher Konservierungsstoff aus, welcher den Zusatz von synthetischen Sulfite ersetzt.

2. Das Verfahren der Herstellung von Wein ohne Zusatz von Sulfiten, zeichnet sich durch folgende Schritte aus:
a. Ernte der Blüten *Castanea sativa* Mill;
b. Aufbereitung und Lagerung der Blüten *C.sativa;*
c. Ernte and Pressen der Trauben zur Most-Gewinnung;
d. Zusetzten des natürlichen Konservierungsstoffes *C.sativa* Blüten zum Most, als Ersatz für synthetische Sulfite;
e. Kühlung des Mosts;
f. Fermentation für die Weinproduktion

3. Das Verfahren der Herstellung von Wein ohne Zusatz von Sulfiten, gemäß der oben genannten Prinzipien zeichnet sich dadurch aus, dass bei Schritt a, die Blüte der männlichen *C.sativa* nach der Dünnungsperiode mit Hand geerntet wird.

4. Das Verfahren der Herstellung von Wein ohne Zusatz von Sulfiten, gemäß der oben genannten Prinzipien zeichnet sich dadurch aus, dass bei Schritt b, die Blume gefriergetrocknet, pulverisiert und im Trockengefäß gelagert wird.

5. Das Verfahren der Herstellung von Wein ohne Zusatz von Sulfiten, gemäß der oben genannten Prinzipien zeichnet sich dadurch aus, dass bei Schritt d, die Menge an Blüte der *C. sativa,* welche zum Wein gegeben wird 10-25g/50L Wein beträgt.

6. Das Verfahren der Herstellung von Wein ohne Zusatz von Sulfiten, gemäß der oben genannten Prinzipien zeichnet sich dadurch aus, dass bei Schritt C, die Trauben am Ende des Sommers geerntet und gepresst werden.

7. Das Verfahren der Herstellung von Wein ohne Zusatz von Sulfiten, gemäß der oben genannten Prinzipien zeichnet sich dadurch aus, dass es sich bei dem Wein um *Vinho Verde* handelt.

8. Das Verfahren der Herstellung von Wein ohne Zusatz von Sulfiten, gemäß der oben genannten Prinzipien zeichnet sich dadurch aus, dass bei Schritt e, der Most in einem gekühlten Fass bei 5°C - 9°C gelagert wird.

9. Das Verfahren der Herstellung von Wein ohne Zusatz von Sulfiten, gemäß des Anspruchs 7, zeichnet sich durch die Umlagerung in ein Fass zur Fermentierung nach 24-48 Stunden Kühlung aus.

10. Das Verfahren der Herstellung von Wein ohne Zusatz von Sulfiten, gemäß der oben genannten Prinzipien zeichnet sich dadurch aus, dass die Fermentation mit der einheimischen Hefe bei 14-16°C über 2-3 Monate durchgeführt wird, es folgt eine Umlagerung in ein anderes Fass.

11. Der Wein, welcher durch das in Schritt 1 bis 9 beschriebene Verfahren gewonnen wurde, zeichnet sich durch eine Konzentration von freiem Schwefeldioxid unterhalb von 10mg/dm³ aus und einer Gesamtkonzentration an Schwefeldioxid von weniger als 33mg/dm³.

12. Der Wein nach Behauptung 10 zeichnet sich durch eine Konzentration an freiem Schwefeldioxid von 8mg/dm³ und eine Gesamtkonzentration an Schwefeldioxid von 18mg/dm³ aus.

13. Der Wein nach den vorher beschriebenen Prinzipien zeichnet sich als *vinho verde* aus.

14. Der Wein nach Behauptung 12 zeichnet sich durch folgende Kriterien aus: Alkoholgehalt mit einem Volumen von 11.0% Volumen; Dichte von 0.9916 g/cm³, gesamtes Trockenextrakt von 20.6 g/dm³, nicht reduzierendes Extrakt von 19.1 g/dm³, Gesamtgehalt an Zucker weniger als 1,5 (LQ) g/dm³, Gesamtgehalt an Säure 7,1g (Weinsäure)/dm³; flüchtige Säure 0,57g(Essigsäure)/dm³; gebundene Säuren 6,4g(Weinsäure)/dm³; pH = 3,24; *L*-Äpfelsäure weniger als 0,3 (LQ) g/dm³, Weinsäure 3,6g/dm³, negativer Befund bezüglich der Stabilität durch oxidativer Veränderung; gesamt Alkoholgehalt mit einem Volumen von 11,1% Volumen.

## Revendications

1. Procédé de production de vin sans addition de sulfites, **caractérisé en ce que** les fleurs de *Castanea sativa* sont utilisées comme conservateurs naturels, en remplacement de l'addition de sulfites synthétiques.

2. Procédé de production de vin sans addition de sulfites, **caractérisé en ce qu'**il comprend les étapes suivantes:
a. Récolte des fleurs de *Castanea sativa* Mill;
b. Traitement et stockage des fleurs de *C. sativa;*
c. Récolte et pressurage des raisins pour obtenir le moût;
d. Ajout de fleurs de *C. sativa* au moût en tant que conservateurs naturels, en remplacement de l'ajout de sulfites synthétiques;
e. Refroidissement du moût;
f. Fermentation pour la production de vin.

3. Procédé de production de vin sans addition de sulfites selon l'une quelconque des revendications précédentes, **caractérisé en ce que**, à l'étape a, des fleurs mâles de *C. sativa* sont récoltées manuellement après la période de fertilisation.

4. Procédé de production de vin sans addition de sulfites selon l'une quelconque des revendications précédentes, **caractérisé en ce que**, à l'étape b, les fleurs sont lyophilisées, réduites en poudre et stockées dans un dessiccateur.

5. Procédé de production de vin sans addition de sulfites selon l'une quelconque des revendications précédentes, **caractérisé en ce que**, à l'étape d, la quantité de fleurs de *C. sativa* ajoutées est de 10-25 g/50 L de vin.

6. Procédé de production de vin sans addition de sulfites selon l'une quelconque des revendications précédentes, **caractérisé en ce que**, à l'étape c, les raisins sont récoltés à la fin de l'été et ensuite pressés.

7. Procédé de production de vin selon l'une quelconque des revendications précédentes, **caractérisé en ce que** le vin sans sulfites ajoutés étant le *vinho verde.*

8. Procédé de production de vin sans addition de sulfites selon l'une quelconque des revendications précédentes, **caractérisé en ce que**, à l'étape e, le moût est placé dans une cuve réfrigérée à une température de 5°C à 9°C.

9. Procédé de production de vin sans addition de sulfites selon la revendication 7, **caractérisé par** le transfert dans une cuve de fermentation après une période de refroidissement de 24 à 48 heures.

10. Procédé de production de vin sans addition de sulfites selon l'une quelconque des revendications précédentes, **caractérisé en ce que** la fermentation du vin est effectuée avec des levures indigènes à une température de 14-16°C pendant 2-3 mois, suivie d'un retransfert dans une autre cuve.

11. Vin obtenu par le procédé décrit dans les revendications 1 à 9, **caractérisé en ce qu'**il présente une concentration en dioxyde de soufre libre inférieure à 10 mg/dm³ et une concentration en dioxyde de soufre total inférieure à 33 mg/dm³.

12. Vin selon la revendication 10, **caractérisé en ce qu'**il présente une concentration en dioxyde de soufre libre de 8 mg/dm³ et une concentration en dioxyde de soufre total de 18 mg/dm³.

13. Vin selon l'une quelconque des revendications précédentes, **caractérisé en ce qu'**il s'agit de *vinho verde.*

14. Vin selon la revendication 12, **caractérisé par** présenter: titre alcoométrique volumique acquis de 11,0% vol; densité de 0,9916 g/cm³; extrait sec total de 20,6 g/dm³; Extrait non réducteur de 19,1 g/dm³; sucres totaux inférieurs à 1,5 (LQ) g/dm³; acidité totale de 7,1 g (acide tartrique)/dm³; acidité volatile de 0,57 g (acide acétique)/dm³; acidité fixée à 6,4 g (acide tartrique)/dm³; pH = 3,24; acide L-malique inférieur à 0,3 (LQ) g/dm³; acide tartrique de 3,6 g/dm³; preuve négative de la stabilité de l'altération de l'oxydation; titre alcoométrique volumique total de 11,1% vol.
